# EUROPEAN PATENT SPECIFICATION

(11) **EP 1 685 331 B1**
(45) Date of publication and mention of the grant of the patent: **02.01.2008**
(21) Application number: 04798582.5
(22) Date of filing: 18.11.2004
(51) Int. Cl.: F16B 37/12, F16B 37/16, F16J 13/02

(54) **Swing bolt assembly**
Gelenkschraubeinrichtung
Ensemble à boulon pivotant

(30) Priority: 18.11.2003 GB 0326856
(43) Date of publication of application: 02.08.2006
(73) Proprietor: FORT VALE ENGINEERING LIMITED, Nelson, Lancashire BB9 0SG (GB)
(72) Inventor: SMITH, David Fredrick Howard, Burnley, Lancashire BB10 3JJ (GB); BAILEY, David, Burnley, Lancashire BB10 2BW (GB)
(74) Representative: Manley, Nicholas Michael
(86) International application number: PCT/GB2004/004867
(87) International publication number: WO 2005/050036

(56) References cited:
- FR-A- 932 677
- GB-A- 855 215
- GB-A- 2 225 825
- US-A- 2 627 293
- US-A- 4 482 368
- US-A- 5 860 779

## Description

The present invention relates to swing bolt assemblies and in particular, but not exclusively, to a swing-bolt assembly for a pressure vessel.

Pressure vessels and tanks in general are provided with lids which typically are circular and are pivotally attached to a neck ring which is attached to the vessel. Swing bolt assemblies secured to the neck ring at pivot brackets engage with lugs secured to the lid so as to clamp the lid in sealing engagement with the neck ring.

Such swing bolt assemblies typically comprise a bolt which is pivotally mounted about a horizontal axis which is also tangential to the exterior of the pressure vessel or tank. A hand nut is threadedly mounted on the swing bolt which may be pivoted upwardly into the slot of a lug bracket attached to the lid. By screwing the hand nut towards the pivotal axis of the swing bolt the hand nut can be made to bear upon the slotted lug bracket, thereby securing the lid of the vessel to the vessel itself. Usually, several swing bolt assemblies are used to provide a secure attachment.

A typical known arrangement is shown in GB 2098302.

The standard swing bolt assembly is formed from a stainless steel swing bolt and a stainless steel slotted lug bracket, whereas the hand nut is made of Naval brass. As the hand nut is tightened against the stainless steel bracket, considerable wear takes place on the seat of the nut. Very often, the seat of the nut is part-spherical and is adapted to engage with part-spherical recesses in the lug bracket, in order to produce a secure fixing. The wearing of the seat of the brass hand nut has a detrimental effect on the engagement of the nut and the lug bracket, thereby reducing the effectiveness of the fixing.

In GB-A-2225825, the hand nut is provided with a captive washer which is rotatably mounted on the hand nut and which is made of a harder material than the hand-nut material. The washer bears against the lugs in use, allowing the hand nut to rotate inside the washer with full face contact on a complementarily-shaped internal seat.

However, in some circumstances, it is undesirable, or not permitted, to use a brass hand nut but instead to form the hand nut from stainless steel, either with or without a captive washer.

However, when the hand nut and the swing bolt are both made from stainless steel the contact between the screw threads can result in galling which can compromise the security of the swing bolt assembly and which normally necessitates replacement or repair of the swing bolt assembly or its components.

In accordance with a first aspect of the present invention, there is provided a swing bolt assembly comprising a securing nut and a pivotally mounted swing bolt, characterised in that the securing nut comprises a first material and an internally threaded insert formed from a second material which differs from the first material, the second material from which the insert is formed differing from that from which the swing bolt is formed.

In one embodiment, the second material from which the insert is made is softer and/or less resistant than the first material.

In one embodiment, the insert is made from brass, for example, Naval brass.

The insert is preferably generally tubular and preferably fits into a generally tubular recess.

The walls of the recess preferably taper, either inwardly or outwardly, from each end.

Preferably, the insert and the first material of the securing nut comprise one or more interengaging recesses and projections to prevent rotation of the insert relative to the first material of the nut. For example, there may be a plurality of interengaging recesses and projections around the periphery of the insert and around the wall of the recess which receives the insert.

Preferably, the insert is hot forged into the recess and is preferably subsequently bored and tapped.

The nut assembly may further comprise a captive washer which is rotatably mounted with respect to the nut.

The nut on the one hand and the captive washer on the other hand are preferably complementarily-shaped.

Preferably, the captive washer is harder and/or more wear resistant than the material from which the insert is made.

Preferably, the material from which the swing bolt is made is harder and/or more wear resistant than the second material from which the insert is made.

Preferably, the swing bolt and the first material from which the nut is made comprise the same material.

By way of example only, a specific embodiment of the present invention will now be described, with reference to the accompanying drawings, in which:

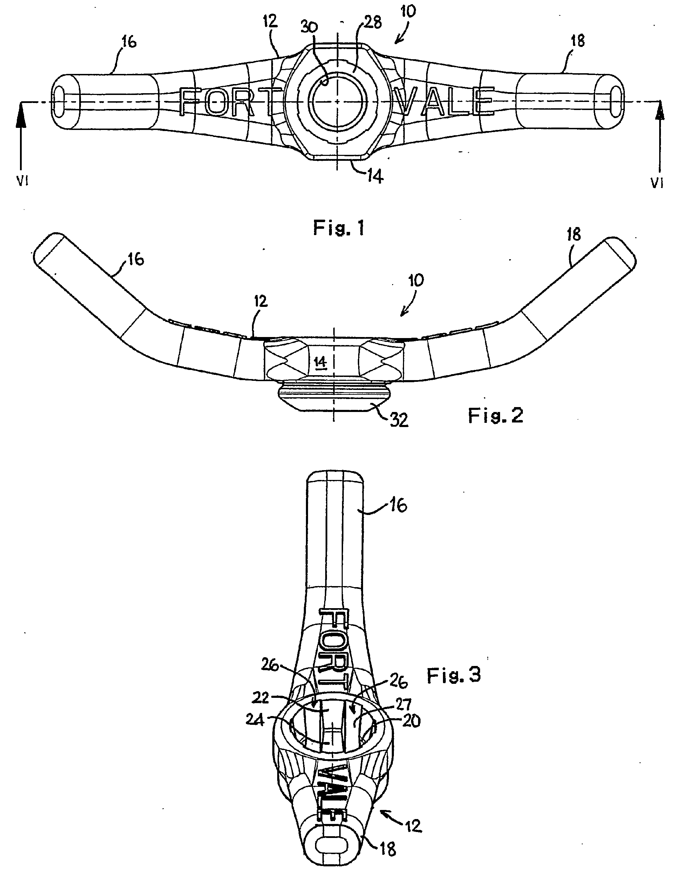

Fig. 1 is a plan view of an embodiment of hand nut in accordance with the present invention;
Fig. 2 is a side elevation of the hand nut of Fig. 1;
Fig. 3 is a perspective view of the hand nut of Fig. 1, with the insert removed;
Fig. 4 is a plan view of the hand nut as shown in Fig. 3;
Fig. 5 is a cross-sectional view of the hand nut as shown in Fig. 3, looking in the direction of the arrows V-V;
Fig. 6 is a cross-sectional view of the hand nut of Fig. 1, with the captive washer removed, looking in the direction of the arrows VI-VI; and
Fig. 7 is a view of the portion marked A in Fig. 6, to a larger scale.

Referring to the Figures, a hand nut assembly 10 for a swing bolt assembly comprises a hand nut 12 having a tubular central portion 14 and two identical, dog-legged arms 16, 18 extending upwardly from diametrically opposite sides of the tubular central portion 14. The internal wall of the tubular central portion 14 is not cylindrical but instead is formed into a narrowed waist 20 from two frustoconical wall portions 22, 24 each of which tapers from a respective one end of the tubular central portion to the narrowed waist. The internal wall of the tubular central portion is also provided with six elongate recesses 26, equally angularly spaced around the tubular central portion and whose base walls 27 extend parallel to the longitudinal axis of the tubular central portion 14.

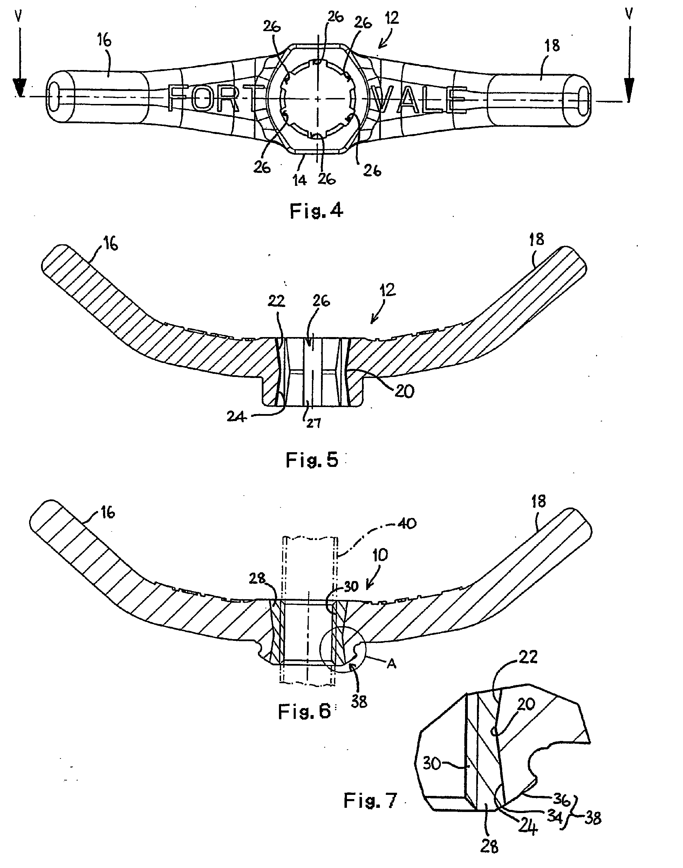

The tubular central portion 14 receives a complementarily-shaped tubular insert 28 made from a material which is softer and/or less wear resistant than the stainless steel of the hand nut 12, in this case Naval brass. The tubular insert 28 is hot-forged into the stainless steel tubular central portion 14 of the hand nut 10 and is subsequently drilled and tapped to produce an internal screw thread 30 which is engageable with the screw thread of a swing bolt 40 (shown in dotted lines in the Figures) forming part of a swing bolt assembly. It will also be noted that the lowermost portion of the central tubular portion 14 is provided with a peripheral recess which is to receive the inturned peripheral edge of a captive stainless steel annular cup or washer 32 which is thereby free to rotate with respect to the central tubular portion 14. It will also be seen from Figs. 4 and 5 that the insert 28 projects downardly beyond the lowermost end of the central tubular portion 14 and that the projecting end 34 of the insert and the adjacent periphery of the central tubular portion 36 are shaped to form a part-spherical surface 38 which is shaped complementarily to the inner face of the captive washer.

Thus, when the hand nut is screwed onto a swing bolt 40 of the swing bolt assembly (shown in dotted lines in the Figures), the brass internal screw threads 30 of the insert 28 engage with the stainless steel thread of the swing bolt, which greatly reduces the occurrence of galling since the insert is made of material which differs from that of the swing bolt. In addition, as the hand nut is tightened into frictional contact with the lugs of a lug bracket, the primary frictional contact is between the projecting end 34 of the insert and the inner face of the captive washer, which again reduces the likelihood of galling. However, this allows the swing bolt 40 and the hand nut 12 to be formed from the same material.

The invention is not restricted to the details of the foregoing embodiment. For example, although the tubular insert 28 is described as being made from Naval brass, other materials could be used instead, both softer and harder than stainless steel. For example, it would be possible to form the insert from plastics material.

Moreover, although the internal wall of the tubular portion 14 is shown and described as having a narrowed waist portion, the diameter of the wall may instead increase from each end, i.e. the frusto-conical wall portions 22, 24 may instead taper towards the respective ends of the tubular central portion.

## Claims

1. A swing bolt assembly comprising a securing nut (12) and a pivotally mounted swing bolt (40), **characterised in that** the securing nut comprises a first material and an internally threaded insert (28) formed from a second material which differs from the first material, the second material from which the insert (28) is formed differing from that from which the swing bolt (40) is formed.

2. A swing bolt assembly as claimed in claim 1, wherein the second material from which the insert (28) is made is softer and/or less wear resistant than the first material.

3. A swing bolt assembly as claimed in claim 2, wherein the second material comprises brass.

4. A swing bolt assembly as claimed in claim 3, wherein the second material comprises Naval brass.

5. A swing bolt assembly as claimed in any of the preceding claims, wherein the insert (28) is generally tubular.

6. A swing bolt assembly as claimed in claim 5, wherein the insert (28) fits into a generally tubular through recess (22, 24) of the first material.

7. A swing bolt assembly as claimed in claim 6, wherein the walls of the through recess taper (22, 24) inwardly from each end.

8. A swing bolt assembly as claimed in claim 6, wherein the walls of the through recess taper outwardly from each end.

9. A swing bolt assembly as claimed in any of the preceding claims, wherein the outer walls of the insert (28) and the walls of the through recess (22, 24) into which the insert is fitted are complementarily shaped and adapted to prevent rotation of the insert relative to the first material of the nut.

10. A swing bolt assembly as claimed in any of the preceding claims, wherein the insert (28) and the securing nut (12) further comprise one or more of interengaging recesses (26) and projections to prevent rotation of the insert relative to the first material of the nut.

11. A swing bolt assembly as claimed in claim 10, comprising a plurality of interengaging recesses (26) and projections around the periphery of the insert and around the wall of the recess (22, 24) which receives the insert (28).

12. A swing bolt assembly as claimed in any of claims 1 to 11, wherein the insert (28) is hot-forged into the first material of the nut.

13. A swing bolt assembly as claimed in claim 12, wherein the hot-forged insert (28) is bored and tapped.

14. A swing bolt assembly as claimed in any of the preceding claims, further comprising a captive washer (32) which is rotatably mounted with respect to the nut.

15. A swing bolt assembly as claimed in claim 14, wherein the nut (12) and the washer (32) are complementarily shaped.

16. A swing bolt assembly as claimed in claim 15, wherein the nut (12) and the washer (32) comprise a complementary part-spherical portion (38).

17. A swing bolt assembly as claimed in any of claims 14 to 16, wherein the captive washer (32) is harder and/or more wear resistant than the second material from which the insert (28) is made.

18. A swing bolt assembly as claimed in any of the preceding claims, wherein the material from which the swing bolt (40) is made is harder and/or more wear resistant than the second material from which the insert (28) is made.

19. A swing bolt assembly as claimed in any of the preceding claims, wherein the first material from which the securing nut (12) is made and the material from which the swing bolt (40) is made are the same.

## Patentansprüche

1. Schwenkbolzenbaugruppe, die eine Sicherungsmutter (12) und einen schwenkbar angebrachten Schwenkbolzen (40) aufweist, **dadurch gekennzeichnet, dass** die Sicherungsmutter ein erstes Material und einen Einsatz (28) mit Innengewinde gebildet aus einem zweiten Material aufweist, das sich von dem ersten Material unterscheidet, wobei sich das zweiten Material, aus dem der Einsatz (28) gebildet ist, von dem unterscheidet, aus dem der Schwenkbolzen (40) gebildet ist.

2. Schwenkbolzenbaugruppe nach Anspruch 1, bei der das zweite Material, aus dem der Einsatz (28) besteht, weicher und/oder weniger verschleißfest als das erste Material ist.

3. Schwenkbolzenbaugruppe nach Anspruch 2, bei der das zweite Material Messing aufweist.

4. Schwenkbolzenbaugruppe nach Anspruch 3, bei der das zweite Material Naval-Messing aufweist.

5. Schwenkbolzenbaugruppe nach irgendeinem der vorhergehenden Ansprüche, bei der der Einsatz (28) allgemein röhrenförmig ist.

6. Schwenkbolzenbaugruppe nach Anspruch 5, bei der der Einsatz (28) in eine allgemein röhrenförmige durchgehende Ausnehmung (22, 24) des ersten Materials passt.

7. Schwenkbolzenbaugruppe nach Anspruch 6, bei der die Wände der durchgehenden Ausnehmung (22, 24) sich von jedem Ende nach innen hin verjüngen.

8. Schwenkbolzenbaugruppe nach Anspruch 6, bei der die Wände der durchgehenden Ausnehmung sich von jedem Ende nach außen hin verjüngen.

9. Schwenkbolzenbaugruppe nach irgendeinem der vorhergehenden Ansprüche, bei der die Außenwände des Einsatzes (28) und die Wände der durchgehenden Ausnehmung (22, 24), in die der Einsatz eingesetzt wird, komplementär geformt und angepasst sind, um Drehung des Einsatzes in Bezug zu dem ersten Material der Mutter zu verhindern.

10. Schwenkbolzenbaugruppe nach irgendeinem der vorhergehenden Ansprüche, bei der der Einsatz (28) und die Sicherungsmutter (12) weiter eine oder mehrere ineinandergreifende Ausnehmungen (26) und Vorsprünge aufweisen, um Drehung des Einsatzes in Bezug zu dem ersten Material der Mutter zu verhindern.

11. Schwenkbolzenbaugruppe nach Anspruch 10, die eine Mehrzahl ineinandergreifender Ausnehmungen (26) und Vorsprünge um den Umfang des Einsatzes herum und um die Wand der den Einsatz (28) aufnehmenden Ausnehmung (22, 24) herum aufweist.

12. Schwenkbolzenbaugruppe nach irgendeinem der Ansprüche 1 bis 11, bei der der Einsatz (28) in das erste Material der Mutter warmgeschmiedet wird.

13. Schwenkbolzenbaugruppe nach Anspruch 12, bei der der warmgeschmiedete Einsatz (28) eine Bohrung aufweist und mit Gewinde versehen ist.

14. Schwenkbolzenbaugruppe nach irgendeinem vorhergehenden Anspruch, die weiter eine unverlierbare Scheibe (32) aufweist, welche drehbar in Bezug zur Mutter angebracht ist.

15. Schwenkbolzenbaugruppe nach Anspruch 14, bei der die Mutter (12) und die Scheibe (32) komplementär geformt sind.

16. Schwenkbolzenbaugruppe nach Anspruch 15, bei der die Mutter (12) und die Scheibe (32) einen komplementären teilkugelförmigen Teil (38) aufweisen.

17. Schwenkbolzenbaugruppe nach irgendeinem der Ansprüche 14 bis 16, bei der die unverlierbare Scheibe (32) härter und/oder verschleißfester als das zweiten Material ist, aus dem der Einsatz (28) besteht.

18. Schwenkbolzenbaugruppe nach irgendeinem der vorhergehenden Ansprüche, bei der das Material, aus dem der Schwenkbolzen (40) besteht, härter und/oder verschleißfester als das zweite Material ist, aus dem der Einsatz (28) besteht.

19. Schwenkbolzenbaugruppe nach einem der vorhergehenden Ansprüche, bei dem das erste Material, aus dem die Sicherungsmutter (12) besteht, und das Material, aus dem der Schwenkbolzen (40) besteht, die gleichen sind.

## Revendications

1. Ensemble boulon pivotant comprenant un écrou de serrage (1) et un boulon pivotant (40) monté de façon pivotante, **caractérisé en ce que** l'écrou de serrage comprend un premier matériau et une pièce rapportée (28) à filetage interne laquelle est fabriquée avec un deuxième matériau qui est différent du premier matériau, le deuxième matériau avec lequel la pièce rapportée (28) est fabriquée étant différent de celui avec lequel le boulon pivotant (40) est fabriqué.

2. Ensemble boulon pivotant, selon la revendication 1, le deuxième matériau avec lequel la pièce rapportée (28) est fabriquée étant plus doux et/ou moins résistant à l'usure que le premier matériau.

3. Ensemble boulon pivotant, selon la revendication 2, le deuxième matériau comprenant du laiton.

4. Ensemble boulon pivotant, selon la revendication 3, le deuxième matériau comprenant du laiton naval.

5. Ensemble boulon pivotant, selon l'une quelconque des revendications précédentes, la pièce rapportée (28) étant généralement tubulaire.

6. Ensemble boulon pivotant, selon la revendication 5, la pièce rapportée (28) se logeant dans un évidement traversant (22, 24) généralement tubulaire fabriqué dans le premier matériau.

7. Ensemble boulon pivotant, selon la revendication 6, les parois de l'évidement traversant (22, 24) s'effilant vers l'intérieur à partir de chaque extrémité.

8. Ensemble boulon pivotant, selon la revendication 6, les parois de l'évidement traversant s'effilant vers l'extérieur à partir de chaque extrémité.

9. Ensemble boulon pivotant, selon l'une quelconque des revendications précédentes, les parois externes de la pièce rapportée (28) et les parois de l'évidement traversant (22, 24) dans lequel la pièce rapportée est logée étant façonnées de façon complémentaire et étant conçues pour empêcher la rotation de la pièce rapportée par rapport au premier matériau de l'écrou.

10. Ensemble boulon pivotant, selon l'une quelconque des revendications précédentes, la pièce rapportée (28) et l'écrou de serrage (12) comprenant en outre un ou plusieurs évidements (26) et saillies d'inter-engagement afin d'empêcher la rotation de la pièce rapportée par rapport au premier matériau de l'écrou.

11. Ensemble boulon pivotant, selon la revendication 10, comportant une pluralité d'évidements (26) et de saillies d'inter-engagement autour de la périphérie de la pièce rapportée et autour de la paroi de l'évidement (22, 24) lequel reçoit la pièce rapportée (28).

12. Ensemble boulon pivotant, selon l'une quelconque des revendications 1 à 11, la pièce rapportée (28) étant posée par forgeage à chaud dans le premier matériau de l'écrou.

13. Ensemble boulon pivotant, selon la revendication 12, la pièce rapportée (28) forgée à chaud étant soumise à un perçage et à un taraudage.

14. Ensemble boulon pivotant, selon l'une quelconque des revendications précédentes, comprenant en outre une rondelle encastrée (32) laquelle est montée de façon rotative par rapport à l'écrou.

15. Ensemble boulon pivotant, selon la revendication 14, l'écrou (12) et la rondelle (32) ayant été façonnés de façon complémentaire.

16. Ensemble boulon pivotant, selon la revendication 15, l'écrou (12) et la rondelle (32) comprenant une section complémentaire (38) partiellement sphérique.

17. Ensemble boulon pivotant, selon l'une quelconque des revendications 14 à 16, la rondelle encastrée (32) étant plus dure et/ou plus résistante à l'usure que le deuxième matériau avec lequel la pièce rapportée (28) est fabriquée.

18. Ensemble boulon pivotant, selon l'une quelconque des revendications précédentes, le matériau avec lequel le boulon pivotant (40) est fabriqué étant plus dur et/ou plus résistant à l'usure que le deuxième matériau avec lequel la pièce rapportée (28) est fabriquée.

19. Ensemble boulon pivotant, selon l'une quelconque des revendications précédentes, le premier matériau avec lequel l'écrou de serrage (12) est fabriqué et le matériau avec lequel le boulon pivotant (40) est fabriqué étant identiques.
